**Europäisches Patentamt**

**European Patent Office**

**Office européen des brevets**

(19)

(11) Veröffentlichungsnummer: **0 320 955**

**A2**

(12) # EUROPÄISCHE PATENTANMELDUNG

(21) Anmeldenummer: **88121047.0**

(22) Anmeldetag: **15.12.88**

(51) Int. Cl.⁴: **F16D 13/68**

(30) Priorität: **18.12.87 DE 3743075**

(43) Veröffentlichungstag der Anmeldung:
**21.06.89 Patentblatt 89/25**

(84) Benannte Vertragsstaaten:
**DE ES FR GB IT**

(71) Anmelder: **Fichtel & Sachs AG**
**Ernst-Sachs-Strasse 62**
**D-8720 Schweinfurt(DE)**

(72) Erfinder: **Köck, Wolfgang**
**Von-Henneberg-Strasse 18**
**D-8722 Obbach(DE)**
Erfinder: **Raab, Harald**
**Einsteinstrasse 62**
**D-8720 Schweinfurt(DE)**
Erfinder: **Dotter, Karl Heinz**
**Ahornstrasse 18**
**D-8721 Dittelbrunn(DE)**
Erfinder: **Ament, Norbert**
**Gartenstrasse 3**
**D-8727 Werneck(DE)**

(74) Vertreter: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) **Kupplungsscheibe.**

(57) Die Kupplungsscheibe für eine Kraftfahrzeug-Reibungskupplung umfaßt eine Nabe (1), an der über einen Drehschwingungsdämpfer (7) eine mit Reibbelägen (11) versehene Mitnehmerscheibe (9) gleichachsig drehbar gelagert ist. Der Drehschwingungsdämpfer hat zwei relativ zueinander drehbare Dämpferteile (13, 15 bzw. 19), die über Federn (33) drehelastisch miteinander gekuppelt sind. Eines der Dämpferteile (13, 15) ist über wenigstens ein Wälzlager (39, 41) drehbar an der Nabe (1) geführt. Das Wälzlager mindert insbesondere die im Leerlaufbetrieb auftretende Reibung.

Fig. 1

# Kupplungsscheibe

Die Erfindung betrifft eine Kupplungsscheibe für eine Kraftfahrzeug-Reibungskupplung.

Aus der DE-A-35 44 500 ist eine Kupplungsscheibe für eine Kraftfahrzeug-Reibungskupplung bekannt, bei der an einer Nabe mittels eines Drehschwingungsdämpfers eine mit Kupplungsreibbelägen versehene Mitnehmerscheibe über einen begrenzten Drehwinkel drehbar gelagert ist. Der Drehschwingungsdämpfer hat zwei relativ zueinander um die Drehachse der Nabe drehbare Dämpferteile, die über mehrere Dämpferfedern drehelastisch miteinander gekuppelt sind. Das die Mitnehmerscheibe tragende Dämpferteil ist über einen Kunststoff-Gleitring an der Nabe gelagert. Eine solche Lagerung ist jedoch hoher Beanspruchung vielfach nicht gewachsen.

Es ist Aufgabe der Erfindung, eine Kupplungsscheibe zu schaffen, die eine möglichst spielfreie Lagerung bei möglichst konstanten und niedrigen Reibungskräften selbst dann ermöglicht, wenn zwischen der Mitnehmerscheibe und der Nabe hohe radiale Kräfte wirken.

Im Rahmen der Erfindung werden die beiden Dämpferteile über wenigstens ein Wälzlager aneinander gelagert. Die unvermeidbare Grundreibung der Kupplungsscheibe wird damit durch rollende Reibung bestimmt, die insbesondere bei hoher Belastung wesentlich geringer ist, als die gleitende Reibung herkömmlicher Gleitringe. Darüberhinaus kann auch bei hoher Belastung der Verschleiß der Lagerstellen wesentlich kleiner gehalten werden. Das konstante, sehr niedrige Reibungsniveau kann durch zusätzliche Reibeinrichtungen gezielt auf nach wie vor ebenfalls noch niedrige Reibwerte angehoben werden, was insbesondere für die Dämpfung von im Leerlaufbetrieb auftretenden Drehschwingungen von Vorteil ist. Wenn die Kupplungsscheibe einen für den Lastbetrieb bemessenen Drehschwingungsdämpfer und einen für den Leerlaufbetrieb bemessenen Drehschwingungsdämpfer umfaßt, sind die Wälzlager vorzugsweise so angeordnet, daß sie die im Leerlaufbetrieb gegeneinander sich verdrehenden Komponenten aneinander lagern, da gerade hier die sehr niedrige und konstante Reibkraft der Wälzlager von Vorteil ist.

Der Drehschwingungsdämpfer der Kupplungsscheibe kann herkömmlich ausgebildet sein und beispielsweise zwei mit axialem Abstand voneinander angeordnete erste Scheibenteile sowie ein zwischen den beiden ersten Scheibenteilen angeordnetes und über die Dämpfungsfedern drehelastisch mit den ersten Scheibenteilen gekuppeltes zweites Scheibenteil umfassen. Die beiden zweiten Scheibenteile tragen die mit den Kupplungsreibbelägen versehene Mitnehmerscheibe und sind bevorzugt jeweils für sich mittels jeweils eines Wälzlagers an der Nabe gelagert. Insbesondere bei aus Blech hergestellten ersten Scheibenteilen kann der Schwingungsdämpfer besonders kostengünstig hergestellt werden, wenn die Laufbahnen der Wälzlager einerseits direkt an der Nabe und andererseits direkt in das Blechmaterial der ersten Scheibenteile eingeformt sind. Auf diese Weise können zusätzliche Lagerschalen entfallen. Die beiden Wälzlager lassen sich vorteilhaft als Schrägkugellager ausbilden. Wenn die Momentandrehachsen der Kugeln dieser Schrägkugellager die Drehachse der Nabe in einem Abstand voneinander schneiden, der größer ist als der axiale Abstand der Schrägkugellager voneinander, so lassen sich die beiden Schrägkugellager auch zur axialen Fixierung des Drehschwingungsdämpfers an der Nabe ausnutzen. Durch axiales Vorspannen der aus Blech bestehenden ersten Scheibenteile kann die Lagerung über den gesamten Betriebsbereich spielfrei gehalten werden.

Insbesondere in Ausgestaltungen, bei welchen das zweite Scheibenteil axial beweglich mit der Nabe verbunden ist, kann vorteilhaft vorgesehen sein, daß eines der beiden Wälzlager als axial festes Lager und das andere als axial loses Lager ausgebildet ist. Auf diese Weise können sich sowohl das erste als auch die beiden zweiten Scheibenteile selbsttätig zueinander ausrichten. Das die ersten Scheibenteile relativ zur Nabe axial fixierende Festlager ist bevorzugt als Rillenkugellager ausgebildet. Bei dem Loslager kann es sich um ein Nadel- oder Rollenlager handeln. Die Erfindung läßt sich jedoch auch bei Ausgestaltungen von Kupplungsscheiben einsetzen, bei welchen die beiden ersten Scheibenteile über Komponenten von Reibeinrichtungen an der Nabe axial fixiert sind. In diesen Ausgestaltungen können beide Wälzlager als axial lose Lager ausgebildet sein.

Die vorstehend erläuterten Ausgestaltungen der Erfindung, bei welchen die beiden ersten Scheibenteile über je ein Wälzlager unmittelbar an der Nabe gelagert sind, eignen sich insbesondere für Kupplungsscheiben, bei welchen sowohl eine für den Lastbetrieb bemessene Reibeinrichtung, als auch eine über den Leerlaufbetrieb bemessene Reibeinrichtung axial zwischen den beiden ersten Scheibenteilen angeordnet sind. Bei Ausführungsformen, bei welchen der für den Leerlaufbetrieb bemessene Drehschwingungsdämpfer axial außerhalb der beiden ersten Scheibenteile, d.h. axial seitlich des für den Lastbetrieb bemessenen Schwingungsdämpfer angeordnet ist, besteht die Nabe vielfach aus einer Innennabe und einer konzentrisch dazu angeordneten Außennabe, die über eine Verzahnung mit Drehspiel mit einer Gegenverzahnung der Innennabe gekuppelt ist. Das Drehspiel bestimmt den Arbeitsbereich des zwischen der Außennabe und der Innennabe wirksamen Leerlauf-Drehschwingungsdämpfer. In diesen Ausführungsformen sind die beiden Wälzlager zweckmäßigerweise zwischen der Außennabe und der Innennabe angeordnet. Auch hier können die Wälzlager als gegensinnig geneigte Schrägkugellager ausgebildet sein, die die Außennabe nach beiden axialen Richtungen an der Innennabe fixieren. Es ist aber auch hier möglich, eines der Wälzlager als Festlager und das andere als Loslager auszubilden.

Im folgenden wird die Erfindung anhand einer Zeichnung näher erläutert. Hierbei zeigt:

Fig. 1 einen Axiallängsschnitt durch die obere Hälfte einer Kupplungsscheibe mit einem Drehschwingungsdämpfer, dessen Seitenscheiben über Schrägkugellager an einer Nabe gelagert sind;

Fig. 2 einen Detailschnitt durch die Kupplungsscheibe, gesehen entlang einer Linie II-II in Fig. 1;

Fig. 3 einen teilweisen Axiallängsschnitt durch eine Variante einer Kupplungsscheibe ähnlich Fig. 1, mit einem Festlager und einem Loslager;

Fig. 4 einen teilweisen Axiallängsschnitt durch eine weitere Variante einer Kupplungsscheibe ähnlich Fig. 1 mit zwei Loslagern;

Fig. 5 einen teilweisen Axiallängsschnitt durch eine Kupplungsscheibe mit einer durch zwei Schrägkugellager an einer Innennabe gelagerten Außennabe und

Fig. 6 einen teilweisen Axiallängsschnitt durch eine Variante der Kupplungsscheibe gemäß Fig. 5 mit einem Festlager und einem Loslager.

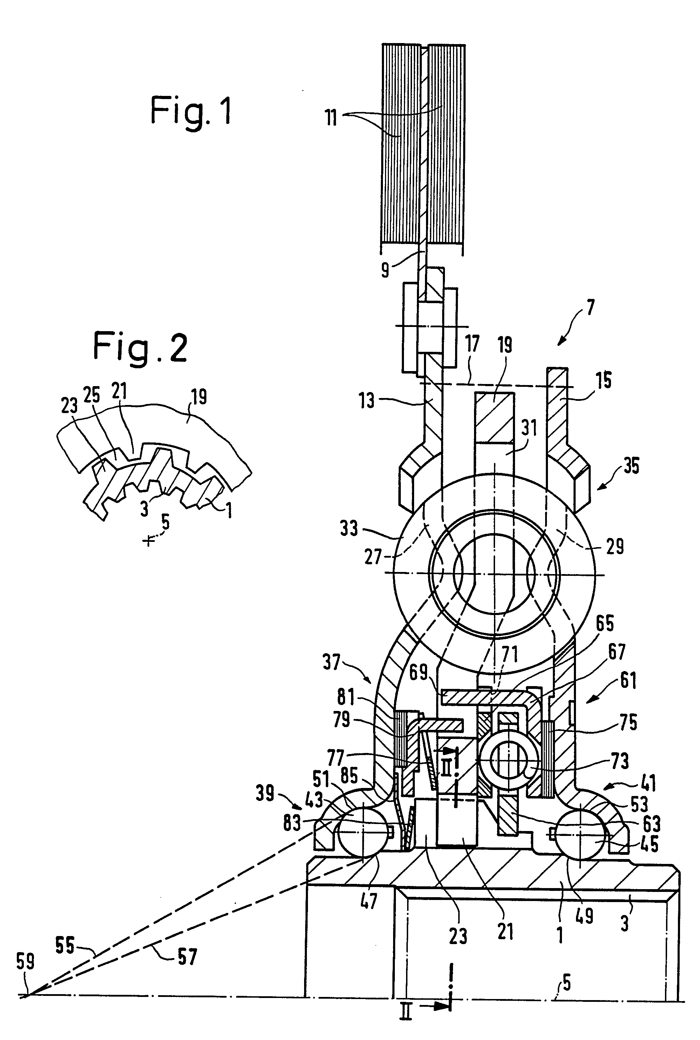

Die in den Fig. 1 und 2 dargestellte Kupplungsscheibe umfaßt eine Nabe 1, die über eine Innenverzahnung 3 in üblicher Weise mit einer um eine Drehachse 5 drehbaren Eingangswelle eines Getriebes kuppelbar ist. An der Nabe 1 ist über einen allgemein mit 7 bezeichneten Drehschwingungsdämpfer eine Mitnehmerscheibe 9 über einen begrenzten Drehwinkel drehbar gelagert, die in üblicher Weise axial beiderseits mit Kupplungsreibbelägen 11 versehen ist. Der Drehschwingungsdämpfer 7 umfaßt zwei erste Scheibenteile in Form von aus Blech hergestellten zweiten Scheiben 13, 15, die über mehrere bei 17 angedeutete Abstandnieten oder dergleichen mit axialem Abstand voneinander zu einer Einheit fest verbunden sind. Axial zwischen den Seitenscheiben 13, 15 ist ein zweites Scheibenteil in Form einer Nabenscheibe 19 angeordnet, welches an seinem Innenumfang eine Verzahnung 21 hat, die in eine Gegenverzahnung 23 der Nabe 1 eingreift und die Nabenscheibe 19 axial beweglich und bis auf ein Drehspiel 25 (Fig. 2) drehfest mit der Nabe 1 kuppelt. In axial zueinander ausgerichteten Fenstern 27, 29 bzw. 31 der Seitenscheiben 13, 15 bzw. der Nabenscheibe 19 sitzen Federn 33, die die Seitenscheiben 13, 15 drehelastisch mit der Nabenscheibe 19 kuppeln. Die Federn, von denen Fig. 1 lediglich eine zeigt, sind in Umfangsrichtung gegeneinander versetzt angeordnet und bilden einen für den Lastbetrieb bemessenen Drehschwingungsdämpfer 35, dessen für den Lastbetrieb bemessene Reibeinrichtung 37 nachfolgend noch näher erläutert wird.

Der Drehschwingungsdämpfer 7 wird durch zwei Schrägkugellager 39, 41 an der Nabe 1 sowohl axial als auch radial geführt. Die Schrägkugellager 39, 41 haben Kugeln 43, 45, die unmittelbar, d.h. ohne zusätzliche Lagerschalen, an inneren Laufbahnen 47, 49 der Nabe 1 einerseits und äußeren, in das Blechmaterial der beiden Scheiben 13, 15 eingeformten Laufbahnen 51, 53 laufen. Wie am Beispiel des Schrägkugellagers 39 dargestellt, schneiden die momentanen Drehachsen 55, 57, um die die Kugeln 43, 45 in den Laufbahnen rotieren, die Drehachse 5 der Nabe 1 in einem Schnittpunkt 59, der auf der dem jeweils anderen Schrägkugellager abgewandten Seite liegt. Der Abstand der beiden Schnittpunkte voneinander ist damit größer als der axiale Abstand der beiden Schrägkugellager 39, 41 voneinander. Die über die Abstandnieten 17 miteinander verbundenen Seitenscheiben 13, 15 sind axial aufeinander zu elastisch vorgespannt und sorgen für eine gleichbleibend spielfreie Lagerung der Mitnehmerscheibe 9 an der Nabe 1. Die Lagerung ist hochbelastbar und auch bei relativ großem Achsversatz zwischen Eingangs- und Ausgangsteilen der Kupplung einsetzbar.

Die Schrägkugellager 39, 41 gewährleisten darüberhinaus eine sehr geringe Grundreibung zwischen der Nabe 1 und der Mitnehmerscheibe 9, wodurch auch im Leerlaufbetrieb bei sehr kleinen Relativdrehwinkeln eine konstante, sehr niedrige Reibung eingehalten werden kann.

Für die Dämpfung von Drehschwingungen im Leerlaufbetrieb ist ein Leerlauf-Drehschwingungsdämpfer 61 vorgesehen. Der Leerlauf-Drehschwingungsdämpfer 61 umfaßt eine im Bereich der Verzahnung 23 an der Nabe 1 befestigte Nabenscheibe 63 und zwei axial beiderseits der Nabenscheibe 63 angeordnete Seitenscheiben 65, 67. Die der Nabenscheibe 19 entfernt gelegene Seitenscheibe 67 hat an ihrem Außenumfang mehrere axial abgebogene Lappen 69, über die sie drehfest sowohl mit der Seitenscheibe 65 als auch der Nabenscheibe 19 gekuppelt ist. Der axiale Abstand der Seitenscheiben 65, 67 wird durch Schultern 71 der Lappen 69 festgelegt. In axial zueinander ausgerichteten Fenstern der Seitenscheiben 65, 67 bzw.

der Nabenscheibe 63 sitzen für den Leerlaufbetrieb bemessene Federn 73, die die Nabenscheibe 63 drehelastisch mit den beiden Seitenscheiben 65, 67 und damit der Nabenscheibe 19 kuppeln. Der Leerlauf-Drehschwingungsdämpfer 61 ist innerhalb des Drehspiels 25 zwischen den Verzahnungen 21, 23 wirksam. Nach Ausgleich dieses Drehspiels ist der Leerlauf-Schwingungsdämpfer 61 überbrückt und ausschließlich der Last-Drehschwingungsdämpfer 35 wirksam.

Die Last-Reibeinrichtung 37 dämpft im Lastbereich auftretende Drehschwingungen und fixiert die Nabenscheibe 19 axial relativ zu den Seitenscheiben 13, 15. Die Reibeinrichtung 37 umfaßt einen Reibring 75 zwischen der Seitenscheibe 15 und der Seitenscheibe 67 sowie eine axial wirkende Tellerfeder 77 zwischen der Naben scheibe 19 und einer drehfest, aber axial beweglich an der Nabenscheibe 19 geführten Druckscheibe 79. Axial zwischen der Druckscheibe 79 und der Seitenscheibe 13 ist ein weiterer Reibring 81 angeordnet. Die Tellerfeder 77 stützt sich über die Nabenscheibe 19, die Seitenscheibe 65, den Lappen 69, die Seitenscheibe 67 und den Reibring 75 an der Seitenscheibe 15 einerseits sowie über die Druckscheibe 79 und den Reibring 81 an der Seitenscheibe 13 andererseits ab. Da die Nabenscheibe 19 sowie die Seitenscheiben 65, 67 relativ zur Nabe 1 axial beweglich sind, können sie sich relativ zu den an der Nabe 1 axial fixierten Seitenscheiben 13, 15 ausrichten.

Da die Grundreibung der beiden Schrägkugellager 39, 41 sehr gering ist, ist auch dem Leerlauf-Schwingungsdämpfer 61 eine Leerlauf-Reibeinrichtung zugeordnet. Die Leerlauf-Reibeinrichtung ist unmittelbar zwischen der Nabe 1 und der Seitenscheibe 13 wirksam und umfaßt eine axial wirkende Tellerfeder 83, die sich über einen Stützring 85 an der Seitenscheibe 13 einerseits und an einer axialen Flanke der Verzahnung 23 andererseits axial abstützt. Der Stützring 85 ist radial innerhalb des Reibrings 81 angeordnet und sorgt für eine von der Lagerung unabhängige, wählbare Größe der Leerlaufreibung.

Im folgenden werden Varianten von Kupplungsscheiben ähnlich Fig. 1 beschrieben. Gleichwirkende Teile sind mit den Bezugszahlen aus Fig. 1 bezeichnet und zur Unterscheidung mit einem Buchstaben versehen. Zur näheren Erläuterung wird auf die Beschreibung der Fig. 1 und 2 Bezug genommen. Die Komponenten 9, 11, 17 und 25 sind der Einfachheit halber nicht dargestellt, jedoch vorhanden.

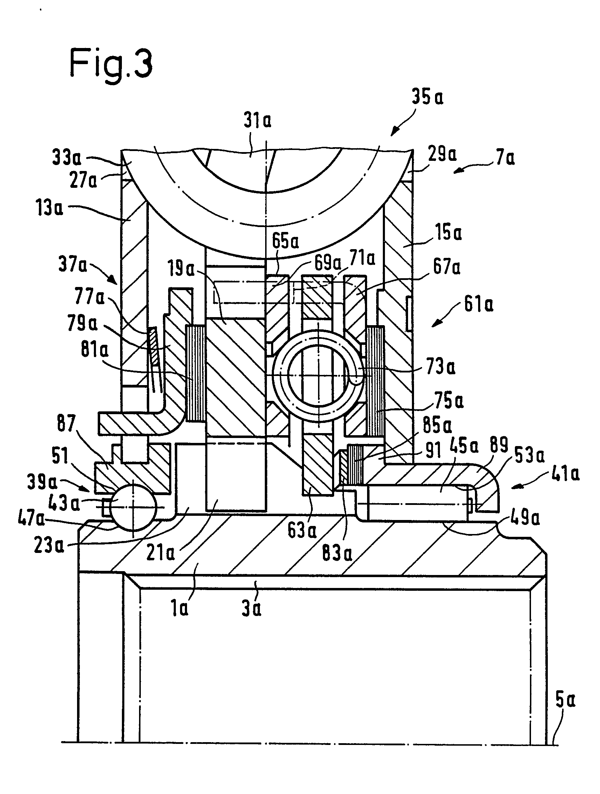

Die Kupplungsscheibe gemäß Fig. 3 unterscheidet sich von der Kupplungsscheibe der Fig. 1 durch die Art ihrer Wälzlager 39a und 41a, mittels der die Seitenscheiben 13a, 15a an der Nabe 1a gelagert sind. Das Wälzlager 39a ist als axial festes Rillenkugellager ausgebildet, dessen Kugeln 43a in einer am Außenumfang der Nabe 1a unmittelbar vorgesehenen Rillenlaufbahn 47a laufen. Die äußere Laufbahn 51a ist in einer Lagerschale 87 vorgesehen, die am Innenumfang der Seitenscheibe 13a befestigt, beispielsweise verstemmt ist. Das Wälzlager 41a der gegenüberliegenden Seitenscheibe 15a ist als axial loses Nadellager ausgebildet und kann keine Axialkräfte auf die Nabe 1a übertragen. Das Nadellager 41a hat unmittelbar am Außenumfang der Nabe 1a laufende Rollen 45a, die sich an einer äußeren Laufbahn 53a einer in die Seitenscheibe 15a eingesetzten Lagerschale 89 abstützen.

Die Last-Reibeinrichtung 37a unterscheidet sich von der Reibeinrichtung 37 der Fig. 1 lediglich durch die Einbauweise ihrer Komponenten. Der Reibring 81a sitzt axial zwischen dem drehfest an der Seitenscheibe 13a geführten Druckring 79a und der Nabenscheibe 19a, während die Tellerfeder 77a axial zwischen dem Druckring 79a der Seitenscheibe 13a angeordnet ist. Die Leerlauf-Reibeinrichtung ist auf der Seite des Leerlaufdämpfers 61a zwischen dessen Nabenscheibe 63a und einem Ringflansch 91 der Lagerschale 89 eingebaut. Sie umfaßt eine Wellfeder 83a, die sich über einen Reibring 85a an dem Ringflansch 91 einerseits und an der Nabenscheibe 63a andererseits stützt. Die Lager der Seitenscheibe 15a sind durch die nicht näher dargestellten Abstandnieten und das die Seitenscheibe 13a fixierende Rillenkugellager relativ zur Nabe 1a festgelegt. Die Nabenscheibe 19a ist wiederum, wie auch die Seitenscheiben 65a, 67a relativ zur Nabe axial verschiebbar, so daß die Abstützung der Tellerfeder 77a über die Reibringe 75a und 81a auf die Seitenscheibe 15a erfolgen kann. Im übrigen entspricht die Kupplungsscheibe der Fig. 3 der Kupplungsscheibe der Fig. 1. Insbesondere erlaubt es die sehr niedrige Rollreibung der Wälzlager 39a und 41a, die Reibkraft der Leerlauf-Reibeinrichtung exakt auf gewünschte Werte abzustimmen. Die Leerlauf-Reibeinrichtung kann gegebenenfalls auch entfallen.

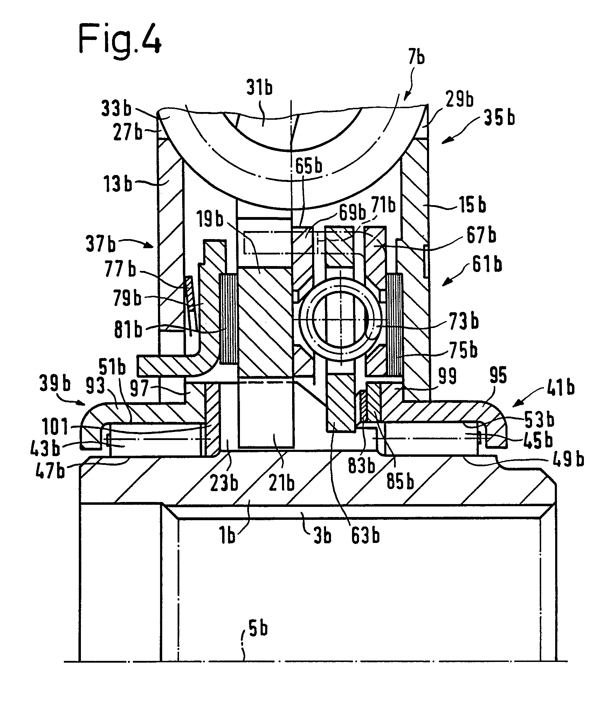

Die Kupplungsscheibe der Fig. 4 unterscheidet sich von der Kupplungsscheibe der Fig. 3 im wesentlichen dadurch, daß beide Wälzlager der Seitenscheiben 13b und 15b als axial lose Nadellager 39b und 41b ausgebildet sind. Die Rollen 43b und 45b beider Nadellager 39b und 41b laufen unmittelbar auf Laufbahnen 47b, 49b der Nabe 1b einerseits und auf Laufbahnen 51b, 53b von Lagerschalen 93, 95, die mit je einem Ringflansch 97, 99 die Seitenscheiben 13b, 15b auf der der Nabenscheibe 19b benachbarten Seite hintergreifen. Da die Nadellager 39b, 41b keine Axialkräfte aufnehmen können, wird der Schwingungsdämpfer 7b insgesamt an der axial fest an der Nabe 1 angebrachten Nabenscheibe 63b des Leerlauf-Schwingungsdämpfers 61b geführt. Die Last-Reibeinrichtung 37b entspricht der Last-Reibeinrichtung 37a der Fig. 3. Ebenso weist die Leerlauf-Reibeinrichtung axial zwischen der Nabenscheibe 63b und dem Ringflansch 99 eine Wellfeder 83b auf, die sich an der Nabenscheibe 63b einerseits und über einen Reibring 85b an dem Ringflansch 99 abstützt. Für die axiale Fixierung der Seitenscheiben 13b, 15b relativ zur Nabe 1b ist zwischen dem Ringflansch 97 und der benachbarten Stirnseite der Verzahnung 23b ein weiterer Reibring 101 angeordnet. Die Wellfeder 83b wird in der Ausgestaltung nach Fig. 4 zur axialen Fixierung der gesamten Dämpfereinrichtung 7b ausgenutzt.

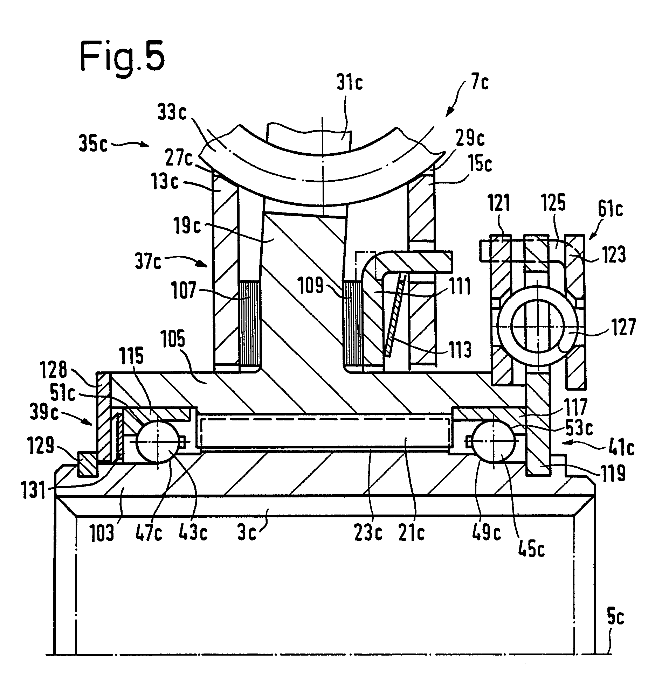

Fig. 5 zeigt eine andere Ausgestaltung einer Kupplungsscheibe, die sich von den vorstehend erläuterten Kupplungsscheiben in erster Linie dadurch unterscheidet, daß die Nabe in eine Innennabe und eine dazu koaxial drehbare Außennabe 105 unterteilt ist. Die Innennabe 103 ist mit der Innenverzahnung 3c für die Kupplung mit der um die Drehachse 5c drehbaren Getriebeeingangswelle versehen. Die Außennabe 105 hat eine Verzahnung 21c, die in eine Gegenverzahnung 23c der Innennabe 103 eingreift und die Außennabe 105 drehfest, jedoch mit vorbestimmtem Drehspiel kuppelt. Das Drehspiel legt, ebenso wie bei der Kupplungsscheibe der Fig. 1, den Arbeitsbereich eines für den Leerlaufbetrieb bemessenen Drehschwingungsdämpfers 61c fest.

Die Außennabe 105 ist einteilig mit der Nabenscheibe 19c verbunden, und axial beiderseits der Nabenscheibe 19c sind wiederum Seitenscheiben 13c, 15c angeordnet, die über für den Lastbereich bemessenen Federn 33c drehelastisch mit der Nabenscheibe 19c gekuppelt sind und die nicht näher dargestellte, mit Reibbelägen versehene Mitnehmerscheiben tragen. Die Federn 33c sitzen wiederum in axial fluchtenden Fenstern 27c, 29c bzw. 31c der Seitenscheiben 13c, 15c und der Nabenscheibe 19c. Die über nicht näher dargestellte Abstandnieten fest miteinander verbundenen Seitenscheiben 13c, 15c sind unmittelbar auf dem Außenumfang der Außennabe 105 drehbar gelagert.

Die Last-Reibeinrichtung 37c umfaßt einen Reibring 107 axial zwischen der Seitenscheibe 13c und der Nabenscheibe 19c, einen Reibring 109 axial zwischen der Nabenscheibe 19c und der Seitenscheibe 15c, einen drehfest, aber axial beweglich an der Seitenscheibe 15c geführten Druckring 111 zwischen dem Reibring 109 und der Seitenscheibe 15c und eine axial wirkende Tellerfeder 113 zwischen dem Druckring 111 und der Seitenscheibe 15c. Die Tellerfeder 113 erzeugt nicht nur die Reibkraft der Last-Reibeinrichtung 37c, sondern fixiert auch über den Reibring 107 die Seitenscheiben 13c, 15c des Last-Schwingungsdämpfers 35c relativ zur Nabenscheibe 19c.

Die Außennabe 105 ist axial beiderseits der Nabenscheibe 19c durch Schrägkugellager 39c, 41c an der Innennabe 103 sowohl radial als auch axial geführt. Die Kugeln 43c, 45c laufen unmittelbar auf Laufbahnen 47c, 49c am Außenumfang der Innennabe 103, während in die Außennabe 105 Lagerschalen 115 bzw. 117 eingesetzt sind, deren Laufbahnen 51c, 53c die Kugeln 43c, 45c führen. Die Laufbahnen 47c, 49c einerseits und 51c, 53c andererseits sind wiederum so gelegt, daß die momentanen Rotationsachsen der Kugeln 43c, 45c die Drehachse 5c auf der dem jeweils anderen Schrägkugellager abgewandten Seite schneiden. Der Abstand der Schnittpunkte der Momentandrehachsen ist damit, ähnlich Fig. 1, größer als der axiale Abstand der Schrägkugellager 43c, 45c voneinander. Die Lagerschalten 115, 117 werden beim Zusammenbau der Außennabe 105 und der Innennabe 103 in die Außennabe eingepreßt.

Der Leerlauf-Schwingungsdämpfer 61c ist zwischen der Außennabe 105 und der Innennabe 103 innerhalb des Drehspiels der Verzahnungen 21c, 23c wirksam und umfaßt eine an der Innennabe 103 beispielsweise durch Verstemmen befestigte Nabenscheibe 119 und zwei axial beiderseits der Nabenscheibe 119 angeordnete Seitenscheiben 121, 123. Die Seitenscheibe 121 ist an der Außennabe 105 befestigt, während die Seitenscheibe 123 durch axial abgebogene Lappen 125 an der Seitenscheibe 121 gehalten ist. Federn 127, die in axial zueinander ausgerichteten Fenstern der Seitenscheiben 121, 123 sowie der Nabenscheibe 119 geführt sind, kuppeln die Seitenscheiben 121, 123 drehelastisch mit der Nabenscheibe 119.

Dem Leerlauf-Schwingungsdämpfer 61c ist eine Leerlauf-Reibeinrichtung zugeordnet. Diese umfaßt eine Stützscheibe 128 auf der dem Leerlauf-Schwingungsdämpfer 61c axial abgewandten Seite der Außennabe 105, die sich axial an einem Sicherungsring 129 der Innennabe 103 abstützt. Zwischen der Stützscheibe 128 und dem Außenring 115 des Schrägkugellagers 39c ist eine axial wirkende Wellfeder 131 eingespannt, die bei der Relativdrehung des Laufrings 115 relativ zur Stützscheibe 128 ein Reibmoment erzeugt. Die beiden Schrägkugellager 39c, 41c haben in axialer Richtung geringfügiges Spiel, so daß die Wellfeder 131 den Außenring 117 des Schrägkugellagers 45c in Reibkontakt mit der Nabenscheibe 119 drückt. Der Anlagekontakt zwischen dem Außenring 117 und der Nabenscheibe 119 kann auch zur Aufnahme von Widerlagerkräften beim Einpressen der Lagerringe 115, 117 ausgenutzt werden. Es versteht sich, daß der Anlagekontakt des Laufrings 117 an der Nabenscheibe 119 auch gegebenenfalls entfallen kann.

Bei der Kupplungsscheibe der Fig. 5 wird nur im Bereich der im Leerlaufbetrieb gegeneinander verdrehbaren Komponenten von einer Wälzlagerung Gebrauch gemacht. Im Lastbetrieb, bei welchem die Verzahnungen 21c, 23c aneinander anliegen, werden lediglich die Seitenscheiben 13c, 15c relativ zur Nabenscheibe 19c verdreht. Die Seitenscheiben 13c, 15c sind über Gleitlager an der Außennabe 105 drehbar gelagert, was jedoch angesichts der im Lastbetrieb auftretenden, vergleichsweise großen Reibkräfte der Reibeinrichtung 37c tolerierbar ist.

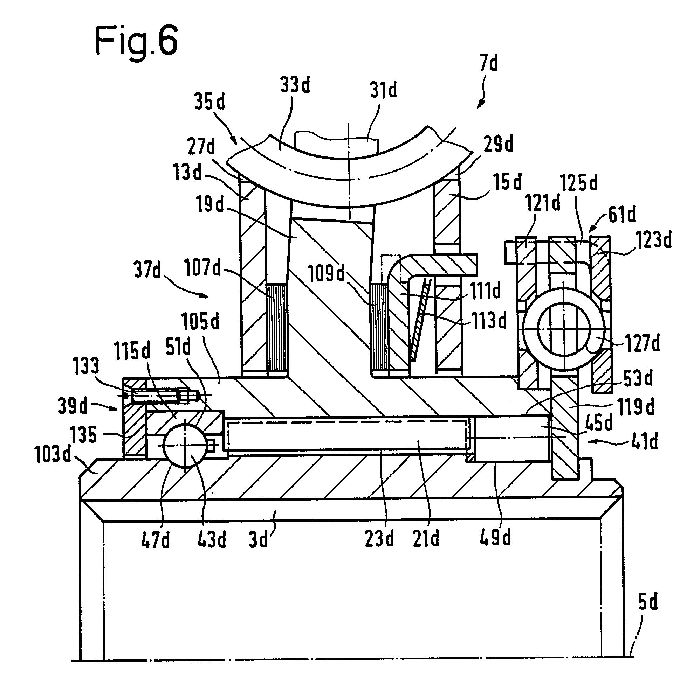

Fig. 6 zeigt eine Variante der Kupplungsscheibe nach Fig. 5, die sich von dieser Kupplungsscheibe lediglich durch die Art ihrer Wälzlager 39d, 41d unterscheidet. Mit der Kupplungsscheibe nach Fig. 5 gleichwirkende Teile sind mit den Bezugszahlen der Fig. 5 und zusätzlich mit dem Buchstaben d bezeichnet. Zur Erläuterung wird zusätzlich zur Beschreibung der Fig. 1 auch auf die Beschreibung der Fig. 5 Bezug genommen.

Während das dem Leerlauf-Drehschwingungsdämpfer 61d axial benachbarte Wälzlager als axial loses Nadellager ausgebildet ist, ist das die Außennabe 105d auf der axial gegenüberliegenden Seite an der Innennabe 103d lagernde Wälzlager 39d als axial festes Rillenkugellager ausgebildet. Die Kugeln 43d und Rollen 45d laufen wiederum in unmittelbar am Außenmantel der Innennabe 103d angeformten Laufbahnen 47d, 49d. Während die äußere Laufbahn 53d des Nadellagers 45d unmittelbar durch den Innenmantel der Außennabe 105d gebildet ist, ist die äußere Laufbahn 51d des Rillenkugellagers 39d in einer in die Außennabe 105d eingesetzten Lagerschale 115d vorgesehen. Die Lagerschale 115d ist durch eine an der Stirnseite der Außennabe 105d mit Schrauben 133 befestigten Deckel 135 demontierbar axial fixiert.

Die Kupplungsscheibe der Fig. 6 hat keine gesonderte Leerlauf-Reibeinrichtung. Eine solche Reibeinrichtung kann jedoch vorgesehen sein, beispielsweise zwischen der Nabenscheibe 119d und der Außennabe 105d, wobei hier auftretende Axialkräfte von dem Rillenkugellager 39d aufgenommen werden. Die Seitenscheiben 13d, 15d des Last-Schwingungsdämpfers 7d sind herkömmlich über Gleitlager an der Außennabe gelagert.

Bei den Kupplungsscheiben der Fig. 5 und 6 können jedoch die Seitenscheiben des Last-Schwingungsdämpfers ebenfalls über Wälzlager an der Außennabe gelagert sein, wie dies anhand der Fig. 1 bis 4 beschrieben ist, um eine exaktere Abstimmung der Last-Reibeinrichtung zu ermöglichen bzw. eine höhere Lebensdauer der Kupplungsscheibe zu erreichen.

## Ansprüche

1. Kupplungsscheibe umfassend eine Nabe (1; 103), eine mit Kupplungsreibbelägen (11) versehene, relativ zur Nabe (1; 103) um eine gemeinsame Drehachse (5) drehbare Mitnehmerscheibe (9), einen Drehschwingungsdämpfer (7) mit zwei um die Drehachse (5) relativ zueinander drehbaren Dämpferteilen (13, 15, 19), die über mehrere Dämpferfedern (33) drehelastisch miteinander gekuppelt sind und von denen ein Dämpferteil (13, 15) mit der Mitnehmerscheibe (9) und das andere (19) der beiden Dämpferteile mit der Nabe (1; 103) gekuppelt ist und wobei eines (13, 15) der beiden Dämpferteile über eine Lagerung an der Nabe (1; 103) drehbar geführt ist, **dadurch gekennzeichnet**, daß die Lagerung wenigstens ein Wälzlager (39, 41) umfaßt.

2. Kupplungsscheibe nach Anspruch 1, dadurch gekennzeichnet, daß einer der beiden Dämpferteile zwei mit axialem Abstand voneinander angeordnete, drehfest miteinander verbundene erste Scheibenteile (13, 15) und der andere der beiden Scheibenteile ein axial zwischen den ersten Scheibenteilen (13, 15) angeordnetes zweites Scheibenteil (19) aufweist, welches über die Dämpferfedern (33) mit den ersten Scheibenteilen (13, 15) drehelastisch gekuppelt ist und daß die Lagerung zwei auf axial gegenüberliegenden Seiten des zweiten Scheibenteils (19) angeordnete Wälzlager aufweist, die eines (13, 15 bzw. 9) der beiden Dämpferteile an der Nabe (1; 103) lagern.

3. Kupplungsscheibe nach Anspruch 2, dadurch gekennzeichnet, daß an der Nabe (1; 103) innere Laufbahnen (47, 49) für Wälzkörper (43, 45) der beiden Wälzlager (39, 41) unmittelbar angeformt sind.

4. Kupplungsscheibe nach Anspruch 2 oder 3, dadurch gekennzeichnet, daß die beiden Wälzlager (39, 41) je eines der beiden ersten Scheibenteile (13, 15) an der Nabe (1) lagern.

5. Kupplungsscheibe nach Anspruch 4, dadurch gekennzeichnet, daß die beiden Wälzlager als Schrägkugellager (39, 41; 39c, 41c) ausgebildet sind.

6. Kupplungsscheibe nach Anspruch 5, dadurch gekennzeichnet, daß die Kugeln (43, 45; 43c, 45c) der Schrägkugellager um Momentandrehachsen (55, 57) rotieren, die die Drehachse (5, 5c) der Nabe (1; 103) auf der dem jeweils anderen Schrägkugellager axial abgewandten Seite schneiden.

7. Kupplungsscheibe nach Anspruch 6, dadurch gekennzeichnet, daß die beiden ersten Scheibenteile (13, 15) aus Blech bestehen und aufeinander zu axial vorgespannt an den Kugeln (43, 45) der Schrägkugellager (39, 41) anliegen.

8. Kupplungsscheibe nach einem der Ansprüche 4 bis 7, dadurch gekennzeichnet, daß die beiden ersten Scheibenteile (13, 15) aus Blech bestehen und an den ersten Scheibenteilen (13, 15) äußere Laufbahnen (51, 53) für Wälzkörper (43, 45) der beiden Wälzlager (39, 41) unmittelbar angeformt sind.

9. Kupplungsscheibe nach einem der Ansprüche 4 bis 8, dadurch gekennzeichnet, daß das zweite Scheibenteil (19a, b) eine Verzahnung (21a) aufweist, über die es axial beweglich und bis auf ein vorbestimmtes Drehspiel drehfest mit einer Gegenverzahnung (23a, b) der Nabe (1a, b) gekuppelt ist,

daß das zweite Scheibenteil (19a, b) über wenigstens eine Reibeinrichtung (37a, b) relativ zu den ersten Scheibenteilen (13a, 15a; 13b, 15b) axial fixiert ist

und daß eines der beiden ersten Scheibenteile (13a, b) an der Nabe (1a, b) axial fixiert ist, während das andere (15a, b) der beiden Scheibenteile durch ein axial loses Wälzlager (41a, b) an der Nabe (1a, b) geführt ist.

10. Kupplungsscheibe nach Anspruch 9, dadurch gekennzeichnet, daß das eine (13a) der beiden Scheibenteile durch ein axial festes Wälzlager (39a) an der Nabe (1a) axial fest gelagert ist.

11. Kupplungsscheibe nach Anspruch 10, dadurch gekennzeichnet, daß das axial feste Wälzlager als Rillenkugellager (39a) und das axial lose Wälzlager als Nadel- oder Rollenlager (41a) ausgebildet ist.

12. Kupplungsscheibe nach einem der.Ansprüche 4 bis 8, dadurch gekennzeichnet, daß die ersten Scheibentei le (13b, 15b) über eine für den Lastbetrieb bemessene Reibeinrichtung (37b) an dem zweiten Scheibenteil (19b) axial fixiert sind und über eine für den Leerlaufbetrieb bemessene Reibeinrichtung (83b, 85b) an der Gegenverzahnung (23b) der Nabe (1b) axial fixiert sind und daß beide Wälzlager als axial lose Wälzlager (39b, 41b) ausgebildet sind.

13. Kupplungsscheibe nach Anspruch 2 oder 3, dadurch gekennzeichnet, daß die Nabe eine Innennabe (103) und eine koaxial dazu drehbar angeordnete Außennabe (105) aufweist, die mit einer Verzahnung (21c, d) in eine Gegenverzahnung (23c, d) der Innennabe (103) eingreift und über die Verzahnung (21c, d) mit vorbestimmtem Drehspiel ansonsten jedoch drehfest mit der Innennabe (103) gekuppelt ist, daß das zweite Scheibenteil (19c, d) fest mit der Außennabe (105) verbunden und über erste, für den Lastbetrieb bemessene Dämpferfedern (33c, d) drehelastisch mit den zweiten Scheibenteilen (13c, 15c; 13d, 15d) gekuppelt ist und daß die beiden Wälzlager (39c, d, 41c, d) zwischen der Außennabe (105) und der Innennabe (103) angeordnet sind.

14. Kupplungsscheibe nach Anspruch 13, dadurch gekennzeichnet, daß die beiden Wälzlager als Schrägkugellager (39c, 41c) ausgebildet sind, deren Kugeln (43c, 45c) um Momentandrehachsen rotieren, die die Drehachse (5c) der Nabe (103, 105) in einem Abstand schneiden, der größer ist als der axiale Abstand der beiden Wälzlager (39c, 41c) voneinander.

15. Kupplungsscheibe nach Anspruch 13, dadurch gekennzeichnet, daß eines der beiden Wälzlager als axial festes Lager (39d) und das andere der beiden Lager als axial loses Lager (41d) ausgebildet ist.

# Fig. 1

# Fig. 2

# Fig.3

# Fig.4

# Fig.5

# Fig.6